# EUROPÄISCHE PATENTSCHRIFT

(11) **EP 0 479 995 B1**
(45) Veröffentlichungstag und Bekanntmachung des Hinweises auf die Patenterteilung: **26.03.1997**
(21) Anmeldenummer: 91907871.7
(22) Anmeldetag: 17.04.1991
(51) Int. Cl.: H02B 1/21

(54) **ANORDNUNG ZUR HALTERUNG MINDESTENS EINER STROMSCHIENE**
DEVICE FOR FASTENING AT LEAST ONE BUSBAR
AGENCEMENT DE FIXATION D'AU MOINS UNE BARRE OMNIBUS

(30) Priorität: 26.04.1990 DE 4013312
(43) Veröffentlichungstag der Anmeldung: 15.04.1992
(73) Patentinhaber: Klöckner-Moeller GmbH, 53115 Bonn (DE)
(72) Erfinder: BOROS, Ferenc, D-5024 Lohmar 1 (DE)
(86) Internationale Anmeldenummer: EP9100731
(87) Internationale Veröffentlichungsnummer: WO9116749

(56) Entgegenhaltungen:
- DE-A- 1 515 485
- DE-A- 2 656 501
- DE-A- 3 321 441

## Beschreibung

Die Erfindung betrifft einen Anordnung zur Halterung mindestens einer Stromschiene nach dem Oberbegriff des Anspruches 1.

Es ist bekannt, Träger für Stromsammelschienen zu verwenden, bei denen die einzelnen Stromsammelschienen in eine Öffnung einer Trägerplatte aus metallischem Werkstoff ragt und die gesamte Kontur der Schiene umlaufend an den Stützstellen durch ein Isolationselement abgestützt ist. Ein Träger dieser Art ist in dem Klöckner-Moeller-Hauptkatalog, Teil 2, Seite 21\6 abgebildet.

Nachteilig bei diesen Sammelschienenträgern ist, daß an den Stützstellen kein Stromabgriff möglich ist, und somit nicht die volle Länge der Stromsammelschiene für den Stromabgriff zur Verfügung steht. Weiterhin können bei hohen Strombelastungen Brummgeräusche infolge der Stromkräfte, die auf das Trägersystem wirken, auftreten.

Es sind Träger für Stromschienen bekannt, bei denen die Stromschiene mittels einer Befestigungsschraube an einem Stützelement befestigt wird.

Ein Träger dieser Art wurde durch die OS 2656501 bekannt. Dieser Träger besteht aus einem zweiteiligen isolierenden Stützelement, der eine Tragschiene zwischen sich aufnimmt und mit hochgezogenen Stützbereichen für die Stromschiene und einem gemeinsamen Befestigungselement versehen ist.

Bei diesem Träger treten, insbesondere bei einem Kurzschluß hohe Beanspruchungen auf.

Es ist Aufgabe der Erfindung, eine Anordnung nach dem Oberbegriff des Anspruches 1 zu schaffen, die eine hohe Kurzschlußfestigkeit bei geringem Gewicht aufweist, einen Stromabgriff über die gesammte Stromschienenlänge ermöglicht, Brummgeräusche dämmt, montagefreundlich und kostengünstig herzustellen ist.

Die Aufgabe wird gemäß der Erfindung durch den Kennzeichnungsteil des Anspruches gelöst.

Aus den Ansprüchen 2 und 3 ergeben sich Vorteile in bezug auf die Beherrschung der Kurzschlußkräfte.

Durch das Kennzeichen des Anspruches 4 wird eine in allen Koordinatenrichtungen und das Trägersystem entkoppelnde elastische Auflage erreicht, die als Dämpfungszone wirkt, so daß mitunter Schwingungen, die über das Trägersystem auf den Verteiler sich fortpflanzen würden, von den insbesondere in den Kennzeichen des Ansprüche 6 und 15 genannten Stegen oder Noppen abgeblockt werden.

Weitere vorteilhafte Weiterbildungen der Erfindung ergeben sich aus den Kennzeichen der Ansprüche 6 bis 19.

Ein Ausführungsbeispiel der Erfindung ist in den Zeichnungen schematisch dargestellt. Es zeigen
- Fig. 1: eine auseinandergezogene perspektivische Darstellung eines Schienenabschnittes einer Anordnung zur Halterung für Stromsammelschienen mit einer C-förmigen Stromsammelschiene,
- Fig.2: eine perspektivische Darstellung eines Isolationselementes,
- Fig.3: eine geschnittene Darstellung eines Hülseneinsatzes nach der Schnittlinie A-A in Fig.4,
- Fig.4: eine perspektivische Darstellung eines Hülseneinsatzes,
- Fig.5: und eine perspektivische Darstellung eines Stützelementes mit Befestigungselementen.

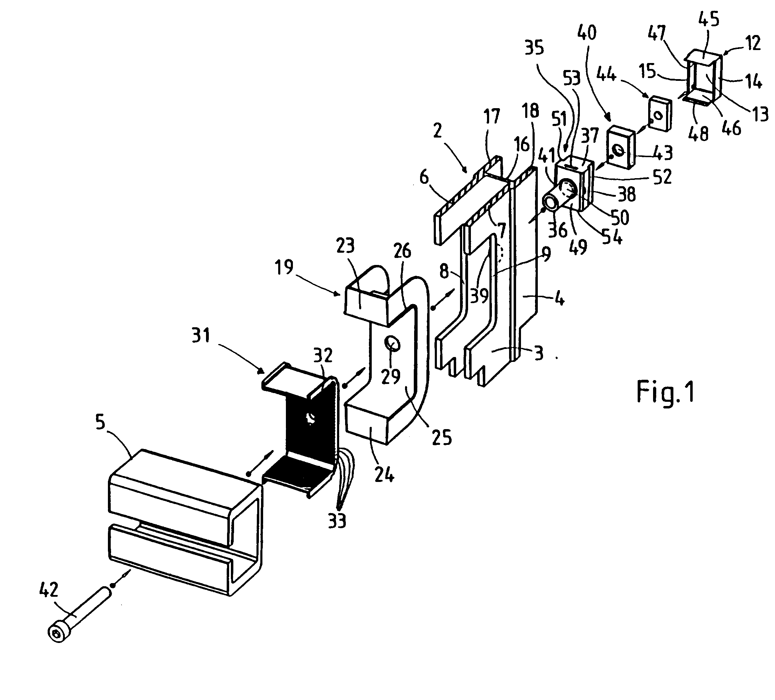

Die in Fig. 1 gezeigte Anordnung 1 dient zur Befestigung von C-förmigen Stromsammelschienen 5 an einem Montagegerüst in einem Verteilergehäuse.

Die Anordnung 1 besteht unter anderem aus einem Stützelement 2 als Aluminium-Stangenprofilabschnitt, das aus zwei an dessen Querschenkeln aneinandergesetzten U-förmigen Abschnitten 3,4 besteht, wobei der vordere Abschnitt 3 senkrecht mit U-förmigen Aussparungen 8,9 an den Seitenschenkeln 6,7 versehen ist und die Stützzone für die Stomsammelschiene 5 bildet, der etwas breitere und kürzere U-Profilförmige hintere Abschnitt 4 einen Verstärkungsabschnitt bildet und die Querschenkel einen gemeinsamen Basisschenkel 16 bilden.

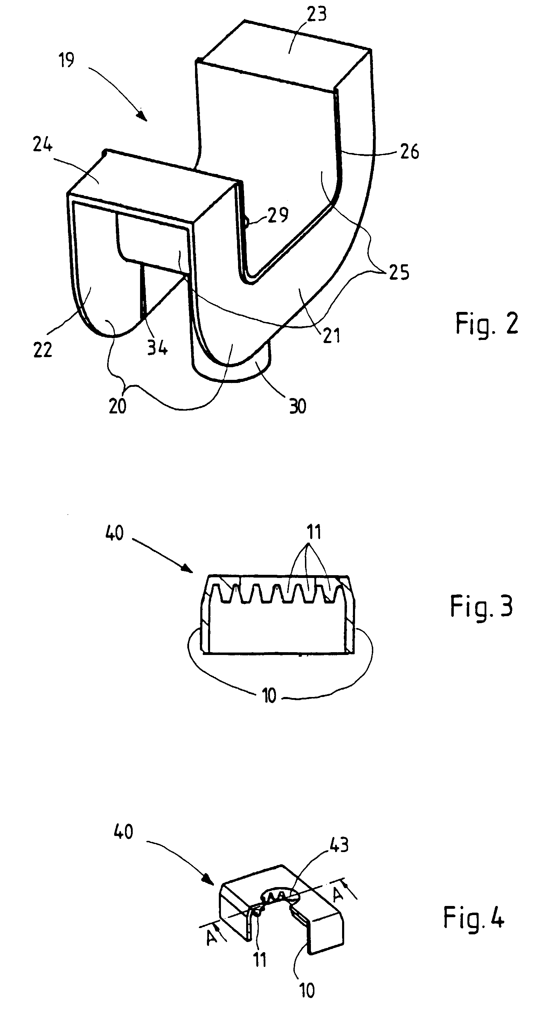

In dem vorderen Abschnitt 3 in dem Bereich, an dem die U-förmigen Aussparungen 8,9 ausgebildet sind, ist ein Isolationselement 19, wie in Fig 2 dargestellt, eingesetzt, das aus einem U-förmigen die Aussparungen 8,9 abdeckenden Isolierteil 25 besteht. Dieses weist in seinen Randbereichen einen das Stützelement 2 überlappenden Isolationsschirm 20 auf, derart, daß der Isolationsschirm 20 mit seinen Seitenabschnitten 21,22 an den Außenseiten der Seitenschenkel 6,7 flach anliegt und mit seinen Querabschnitten 23,24 die Seitenschenkeln 6,7 außerhalb der U-förmigen Aussparungen 8,9 überbrückend abdeckt und somit die Stromsammelschiene 5 gegenüber dem Stützelement 2 ausreichend isoliert.

Der Isolationsschirm 20 ist an den Innenseiten mit kleinen Stegen 34 versehen, die das Isolationselement 19 bei der Montage auf das Stützelement 2 halten.

Das Isolierteil 25 ragt in seiner Breite über den senkrecht sich anschließenden Isolationsschirm 20 hinaus, so daß der überstehende Teil einen Rastansatz 26 bildet.

Weiterhin ist das Isolierteil 25 des Isolationselementes 19 in seiner Mitte mit einer Durchgangsbohrung 29 versehen, um die rückseitig ein rohrförmiger Zapfen 30 angeformt ist, dessen Länge sich etwa bis zum Basisschenkel 16 des Stützelementes 2 erstreckt.

Auf das Isolierteil 25 wird ein bandförmiges Dämpfungselement 31 aufgebracht, das eine elastische Zwischenlage zwischen der Stromsammelschiene 5 und dem Isolationselement 19 bildet. Dieser ist mit seitlich angeformten Raststegen 32 versehen, die den Rastansatz 26 des Isolationselementes 19 rastend hintergreifen. Auf der Vorderseite des Dämpfungselementes 31 sind trapezförmige Stege 33 herausgeformt, die die Stomsammelschiene 5 bei der Montage fixieren und durch ihre elastische Verformbarkeit eine weitere dämpfende Wirkung ausüben, sowie Brummgeräusche dämmen.

Der Basisschenkel 16 ist in dem Bereich der U-förmigen Aussparung 8,9 in der Mitte mit einer Durchgangsbohrung 39 für die Befestigingsschraube 42 und für einen die Befestigungsschraube 42 umhüllenden rohrförmigen Zapfen 36 einer Isolierhülse 35 versehen.

In dem hinteren Abschnitt 4 wird zwischen den Seitenschenkeln 17,18 die Isolierhülse 35 angebracht, die aus einem Gehäuse 37 und dem am Gehäuseboden 49 um eine Durchgangsbohrung 50 angeformten rohrförmigen Zapfen 36 besteht.

Der Zapfen 36 ragt im zusammengesetztem Zustand durch die Durchgangsbohrung 39 des Basisschenkels 16 in den Innenraum des in den vorderen Abschnitt 3 sich befindenden Zapfens 30 des Isolationselemtentes 19 hinein.

Die Gehäuseflachseiten 51,52 liegen nahezu bündig an den Seitenschenkeln 17,18 des hinteren Abschnittes an, die mit kleinen Stegen 38,41 versehen sind, um die Isolierhülse 35 bei der Montage auf dem Stützelement 2 zu halten.

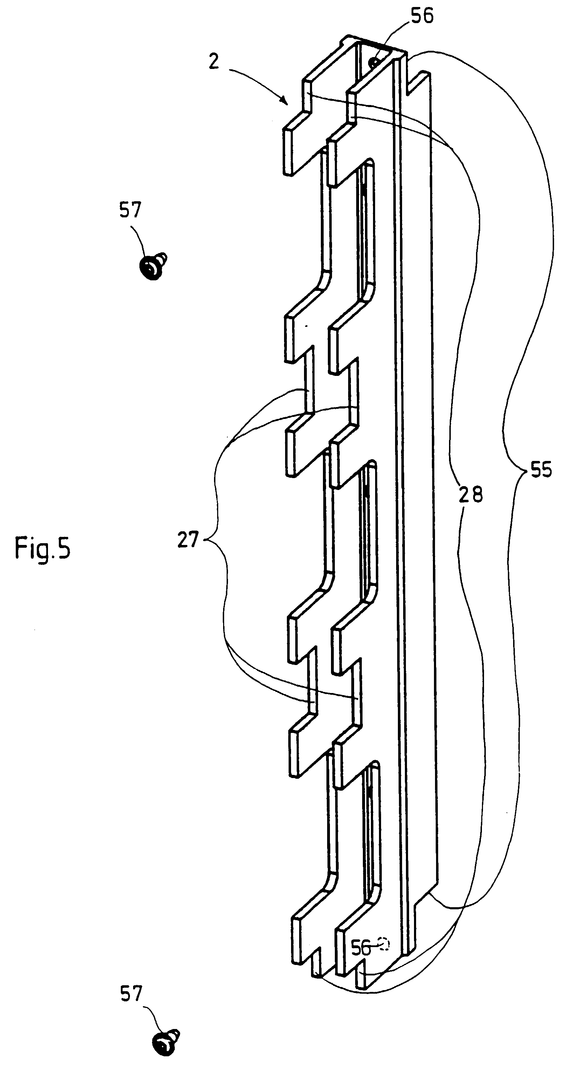

In den rechteckförmigen Innenraum des Gehäuses 37 wird als Zwischenlage ein aus elastischem Material bestehender Hülseneinsatz 40 angebracht, der verhindert, daß sich störende Schwingungen durch die Befestigugnsschraube 42 auf das Stützelement 2 und den übrigen Verteiler überträgt. Der Hülseneinsatz 40 füllt den Gehäuseboden 49 aus und ist mit einer Durchgangsbohrung 43 für die Befestigungsschraube 42 versehen. Dieser ist, wie in Fig. 3 und Fig.4 zu erkennen ist, mit hochgezogenen Randbereichen 10 versehen, so daß zwischen den Mutterkanten und dem Gehäuse 37 ebenfalls eine elastische Zone wirkt. Bodenseitig ist dieser mit herausgeformten trapezförmigen Stegen 11 versehen.

Das Gehäuse 37 der Isolierhülse 35 ist mit einer abnehmbaren Schutzkappe 12 versehen, die einen Schutzkappendeckel 13 mit zwei flach zu den Seitenschenkeln 17,18 des hinteren Abschnittes 4 verlaufenden Schutzkappenwänden 14,15, die das Gehäuse 37 bis etwa zur Mitte der Höhe der Gehäuseflachseite 51, 52 abdecken und zwei senkrecht zu den Seitenschenkeln 17, 18 bis zum Ge häuseboden 49 verlängerten Schutzkappenwänden 45, 46 aufweist. Die verlängerten Schutzkappenwände 45,46 sind an ihrem Ende mit Raststegen 47,48 versehen, die an auf dem Gehäuse 37 angebrachten Rastansätzen 53,54 greifen.

Durch Aussparungen 27,28 an dem Stützelement 2, das in Fig.5 dargestellt ist, besteht die Möglichkeit, einen weiteren Träger, z.B. einen Feldsammelschienenträger bei Verwendung des ersten Trägers als Hauptsammelschienenträger quer anzuordnen, derart, daß der hintere Abschnitt des Feldsammelschienenträgers in eine der Aussparungen 27,28 des Hauptsammelschienenträgers hineinragt.

Die Befestigung des Stützelementes 2 an einem Montagegerüst wird dadurch ereicht, daß in den Endbereichen des Stützelementes 2 in dem hinteren Abschnitt 4 Ausbrüche 55 erfolgen, so daß der Basisschenkel 16 an dem Montagegerüst satt aufliegt und mittels Befestigungselemente 57 das Stützelement 2 in diesem Endbereich befestigt werden kann.

Das Stützelementes 2 besteht vorzugsweise aus Duroplast. Das Isolationselement 19 besteht aus Duro- oder Thermoplast.

## Patentansprüche

1. Anordnung zur Halterung mindestens einer Stromschiene (5) auf einem Stützelelment (2), bestehend aus einer Profilschiene, Isolationselementen und Befestigungselementen, wobei die Stromschiene (5) und das Stützelement (2) senkrecht zueinander angeordnet sind und die Stromschiene (5) innerhalb einer Aussparung in dem Stützelement (2) gehalten ist, **dadurch gekennzeichnet**, daß das Stützelement (2) die Form zweier U-Profile mit aneinanderliegenden Querschenkeln, also einen annäherd H-förmigen Querschnitt, aufweist, daß die Stromschiene (5) innerhalb des vorderen Abschnittes (3) des H-Profils mit einem dazwischenliegenden Isolationselement (19) gehalten und durch eine Befestigungsschraube (42) festgelegt ist, auf der eine Gegenhalterung wirkt, wobei die Gegenhalterung in dem hinteren Abschnitt (4) des H-Profils eingebettet ist und daß in dem vorderen Abschnitt des H-Profils zwischen der Stromschiene (5) und dem Isolationselement (19) ein als elastische Zwischenlage wirkendes Dämpfungselement (31) vorhanden ist.

2. Anordnung nach Anspruch 1, **dadurch gekennzeichnet**, daß das Stützelement (2) als Profilschiene ausgeführt ist, die aus zwei an ihren Querschenkeln aneinanderliegenden U-Profilen geformt ist, die unterschiedliche Querschnitte aufweisen.

3. Anordnung nach Anspruch 1 oder 2, **dadurch gekennzeichent**, daß ein Befestigungselement (42) durch die Stromschiene (5) das elastische Dämpfungselement (31), das Isolationselement (19) und den Basisschenkel (16) in eine als Vierkantmutter (44) ausgeführte Gegenhalterung geführt ist, die in dem der Stromschiene 5 gegenüberliegenden U-Profil (4) verdrehsicher gehalten ist, und sich an dem Basisschenkel (16) abstützt, und daß zwischen der Vierkantmutter (44) und dem Basisschenkel (16) isolierende und dämpfende Mittel vorgesehen sind.

4. Anordnung nach einem der Ansprüche 1 bis 3, **dadurch gekennzeichnet**, daß das zwischen den Stromschiene (5) und dem Isolationselement (19) vorgesehene Dämpfungselement (31) als elastischer Streifen mit zumindest einseitig herausgeformten Stegen (33) oder Noppen ausgeführt ist.

5. Anordnung nach Anspruch 4, **dadurch gekennzeichnet**, daß das Dämpfungselement (31) rückseitig mit angeformten Raststegen (32) ausgebildet ist.

6. Anordnung nach einem der Ansprüche 1 bis 5, **dadurch gekennzeichnet**, daß das Stützelement (2) aus Metall, vorzugsweise Aluminium besteht.

7. Anordnung nach einem der Ansprüche 1 bis 6, **dadurch gekennzeichnet**, daß das Isolationselement (19) aus einem U-förmig geformten Isolierteil (25) besteht, der in seinem Randbereichen die gesamte Kontur umlaufend in einem rechtwinklig angeformten Isolationschirm (20) übergeht, wobei dieser an den Seitenschenkeln (8,9) des U-profilförmigen vorderen Abschnittes (3) flach anliegt, und daß das Isolierteil (25) mit einer Durchgangsbohrung (29) versehen ist, um die rückseitig ein rohrförmiger Zapfen (30) herausragt.

8. Anordnung nach Anspruch 7, **dadurch gekennzeichnet**, daß das Isolierteil (25) des Isolationselementes (19) in seiner Breite über den senkrecht sich anschließenden Isolationsschirm (20) hinaus ragt, so daß der überstehende Teil einen Rastansatz (26) für das Dämpfungselement (31) bildet.

9. Anordnung nach einem der Ansprüche 7 oder 8, **dadurch gekennzeichnet**, daß das Isolationselement (19) an den Innenseiten des Isolationsschirmes (20) mit kleinen Stegen (34) versehen ist, die das Isolationselement (19) bei der Montage am Stützelement (2) halten.

10. Anordnung nach einem der Ansprüche 1 bis 9, **dadurch gekennzeichnet**, daß ein Teil der Befestigungsschraube (42) mit einer Vierkantmutter (44) an ihren der Stromsammelschiene (5) gegenüberliegendem Ende von einer zwischen den Seitenschenkeln (17,18) des Stützelementes (2) befestigten Isolierhülse (35) aus Isolierstoff, vorzugsweise Duroplast, umhüllt ist.

11. Anordnung nach Anspruch 10, **dadurch gekennzeichnet**, daß die Isolierhülse (35) aus einem zwischen den Schenkeln (17,18) des hinteren Abschnittes (4) nahezu bündig aufgebrachten rechteckförmigen Gehäuse (37), in der die Vierkant-Mutter (44) eingebettet ist und einem am Gehäuseboden (49) um eine Durchgangsbohrung (50) zur Isolierung des Befestigungselementes (42) angeformten rohrförmigen Zapfen (36) besteht.

12. Anordnung nach einem der Ansprüche 10 oder 11, **dadurch gekennzeichnet**, daß eine elastische Auflage am Ende des Befestigungselementes (42) durch ein in der Isolierhülse (35) zwischen dem Gehäuseboden (49) und der Vierkant-Mutter (44) eingebetteten aus elastischen Material bestehenden Hülseneinsatz (40) ausgeführt ist, der die Kontur der Vierkant-Mutter (44) überragt und mit zumindest über einen Teil der Mutterhöhe hochgezogenen Randbereichen (10) versehen ist.

13. Anordnung nach Anspruch 12, **dadurch gekennzeichnet**, daß der Hülseneinsatz (40) zumindest einseitig mit herausgeformten Stegen (11) oder Noppen versehen ist.

14. Anordnung nach Anspruch 13, **dadurch gekennzeichnet**, daß die Stege (11 und 33) trapezförmig sind.

15. Anordnung nach einem der Ansprüche 11 bis 14, **dadurch gekennzeichnet**, daß das Gehäuse (37) der Isolierhülse (35) an den Gehäuseflachseiten (51,52) mit kleinen Stegen (38,41) versehen ist, die die Isolierhülse (35) bei der Montage an dem Stützelement (2) halten.

16. Anordnung nach einem der Ansprüche 11 bis 15, **dadurch gekennzeichnet**, daß das Gehäuse (37) der Isolierhülse (35) mit einer Schutzkappe (12) versehen ist, die einen das Gehäuse (37) abdeckende Schutzkappendeckel (13) mit zwei flach zu den Seitenschenkeln (17,18) des hinteren Abschnittes (4) verlaufenden Schutzkappenwänden (14,15), die das Gehäuse (37) bis etwa zur Mitte der Höhe der Gehäuseflachseiten (51,52) abdecken und zwei senkrecht zu den Seitenschenkeln (17,18) bis zum Gehäuseboden (49) verlängerten Schutzkappenwänden (45,46) aufweist, und daß die verlängerten Schutzkappenwände (45,46) an dem Ende mit Rastegen (47,48) versehen sind, die an auf dem Gehäuse (37) angebrachten Rastansätzen (53,54) greifen.

17. Anordnung nach einem der Ansprüche 1 bis 16, **dadurch gekennzeichnet**, daß das Isolationselement (19) aus Duro- oder Thermoplast besteht.

18. Anordnung nach einem der Ansprüche 1 bis 17, **dadurch gekennzeichnet**, daß das Stützelement (2) in dem vorderen Abschnitt (3) zwischen zwei Isolationselementen (19) an den Seitenschenkeln (6,7) mit Aussparungen (27) versehen ist, daß der lichte Abstand der Schenkelseiten der Aussparungen (27) mindestens die Breite des hinteren Abschnittes (4) aufweisen, und daß das Stützelement (2) in den Endabschnitten Aussparungen (28) enthält, die etwa die halbe Breite der Aussparungen (27) zwischen zwei Isolationselementen (19) aufweisen.

19. Anordnung nach Anspruch 18, **dadurch gekennzeichnet**, daß die Seitenschenkel (17,18) des hinteren Abschnittes (4) in den Endbereichen herausgebrochen sind und einen Befestigugsabschnitt (55) bilden, daß der Basisschenkel in dem Befestigungsabschnitt (55) auf einem Montagegerüst satt aufliegen kann, und daß auf den Basisschenkel (16) in dem Befestigungsabschnitt (55) ein oder mehere Durchgangsbohrungen (56) für ein oder mehere Befestigungselemente (57) angeordnet sind.

## Claims

1. An arrangement to hold at least one contact rail (5) on a supporting element (2), consisting of a sectional rail, insulation elements and fastening elements, whereby the contact rail (5) and the supporting element (2) are arranged at right angles to one another and the contact rail (5) is held within a recess in the supporting element (2), **in which** the supporting element (2) has the form of two U-sections with their cross pieces lying against each other, that is, almost an H-shaped cross-section, in which the contact rail (5) is held within the front section (3) of the H-section with an intervening insulating element (19) and fastened by a fastening screw (42) which is held at the other end by a holder, whereby the holder at the other end is seated in the rear section (4) of the H-section and in which there is a damping element (31) functioning as an elastic intermediate layer in the front section of the H-section between the contact rail (5) and the insulating element (19).

2. An arrangement according to claim 1, **in which** the supporting element (2) is designed as a sectional rail which is formed from two U-sections with different cross-sections whose cross pieces are lying against each other.

3. An arrangement according to claim 1 or 2, **in which** a fastening element (42) is passed through the contact rail (5), the elastic damping element (31), the insulation element (19) and the cross piece (16) into a holder at the other end which is designed as a square nut (44) that is held twist-proof in the U-section (4) lying opposite to the contact rail (5) and supported on the cross piece (16), and in which insulating and damping material are provided between the square nut (44) and the cross piece (16).

4. An arrangement according to one of the claims 1 to 3 **in which** the damping element provided (31) between the contact rail (5) and the insulating element (19) is designed as an elastic strip with projecting ridges (33) or knobs on at least one side.

5. An arrangement according to claim 4, **in which** the damping element (31) has locking ridges (32) formed on the rear side.

6. An arrangement according to one of the claims 1 to 5, **in which** the supporting element (2) consists of metal, preferably aluminium.

7. An arrangement according to one of the claims 1 to 6, **in which** the insulation element (19) consists of a U-section shaped insulating part (25) which changes at its edges along the entire profile into an insulation shield (20) formed at right angles, whereby this lies flat on the side legs (8,9) of the U-section profile of the front section (3), and in which the insulating part (25) is provided with a through borehole (29), around which a tube-shaped extension (30) projects from the rear side.

8. An arrangement according to claim 7, **in which** the breadth of the insulating part (25) of the insulation element (19) projects sideways over the insulation screen (20) which joins perpendicularly, so that the projecting part forms a locking ridge (26) for the damping element (31).

9. An arrangement according to one of the claims 7 or 8, **in which** the insulation element (19) is provided with little ridges (34) on the inside of the insulation shield (20) which hold the insulation element (19) to the supporting element (2) upon assembly.

10. An arrangement according to one of the claims 1 to 9, **in which** a part of the fastening screw (42) at the opposite end to the bus bar (5) is covered by an insulating sleeve (35) made of insulating material, preferably Duroplast fastened between the side legs (17,18) of the supporting element (2) by the square nut (44).

11. An arrangement according to claim 10, **in which** the insulating sleeve (35) consists of a square-cornered housing, (37) in which the square nut (44) is seated and which is almost brought flush between the legs (17,18) of the rear section (4), and a tube-shaped extension (36) from the housing base (49) around a through borehole (50) to insulate the fastening element (42).

12. An arrangement according to one of the claims 10 or 11, **in which** an elastic seating at the end of the fastening element (42) is designed as a sleeve insert (40) consisting of elastic material embedded in the insulating sleeve (35) between the base of the housing (49) and the square nut (44), which protrudes above the profile of the square nut (44) and is provided with raised edges (10) at least over a part of the height of the nut .

13. An arrangement according to claim 12, **in which** the sleeve insert (40) is provided with ridges (11) or knobs projecting outwards on at least one side.

14. An arrangement according to claim 13, **in which** the ridges (11 and 33) have a trapezoidal shape.

15. An arrangement according to one of the claims 11 to 14, **in which** the housing (37) of the insulating sleeve (35) is provided with small ridges (38,41) on the flat sides of the housing (51,52) which hold the insulating sleeve (35) on to the supporting element (2) upon assembly.

16. An arrangement according to one of the claims 11 to 13, **in which** the housing (37) of the insulating sleeve (35) is provided with a protective cover (12), which has a protective cover lid (13) which covers the housing (37) with two walls (14,15) of the protective cover which run flat with the side legs (17,28) of the rear section (4) and which cover the housing (37) up to about the middle of the height of the flat sides of the housing (51,52) and has two walls of the protective cover (45,46) extended up to the housing base (49) which are perpendicular to the side legs (17,18), and in which the extended walls of the protective cover (45,46) are provided at the end with locking ridges (47,48) which grip the locking projections (53,54) on the housing (37) when they are brought together.

17. An arrangement according to one of the claims 1 to 16, **in which** the insulation element (19) consists of Duroplast or Thermoplast.

18. An arrangement according to one of the claims 1 to 17, **in which** the supporting element (2) in the front section (3) between two insulation elements (19) on the side legs (6,7) is provided with recesses (27) in which the internal distance between the leg sides of the recesses (27) is at least the width of the rear section (4), and in which the supporting element (2) in the end sections have recesses (28), which are about half the width of the recesses (27) between two insulation elements (19).

19. An arrangement according to claim 18, **in which** the side legs (17,18) of the rear section (4) are cut-away in the end regions and form a fastening section (55), in which the cross piece in the fastening section (55) can rest solidly on a mounting frame, and in which one or a plurality of through boreholes (56) are arranged on the cross piece (16) in the fastening section (55) for one or a plurality of fastening elements (57).

## Revendications

1. Dispositif pour la fixation d'une barre conductrice (5) au moins sur un élément de support (2), consistant en un rail profilé, en éléments isolants et en éléments de fixation, la barre conductrice (5) et l'élément de support (2) étant disposés perpendiculairement l'une à l'autre et la barre conductrice (5) étant maintenue à l'intérieur d'un évidement dans l'élément de support (2) **caractérisé en ce que** l'élément de support (2) présente la forme de deux profilés en U à barrettes transversales disposées l'une contre l'autre, donc une section transversale étant approximativement celle d'un H, en ce que la barre conductrice (5) est maintenue à l'intérieur du segment antérieur (3) du profilé en H au moyen d'un élément isolant (19) intercalé, et fixé au moyen d'une vis de fixation (42), sur laquelle agit une contre-bouterolle, ladite contre-bouterolle étant insérée dans le segment postérieur (4) du profilé en H, et en ce qu'un élément amortisseur (31) agissant comme pièce intercalaire élastique est disposé entre la barre conductrice (5) et l'élément isolant (19) dans le segment antérieur du profilé en H.

2. Dispositif selon revendication 1, **caractérisé en ce que** l'élément de support (2) est exécuté comme barre profilée, laquelle est formée de deux profilés en U à barrettes transversales disposées l'une contre l'autre, lesdits profilés en U présentant des sections transversales différentes.

3. Dispositif selon revendication 1 ou 2, **caractérisé en ce qu'** un élément de fixation (42) est engagé dans une contre-bouterolle exécutée comme écrou carré (44), en passant au travers de la barre conductrice (5), de l'élément amortisseur éla stique (31), de l'élément isolant (19) et de la face de base (16),
ladite contre-bouterolle étant maintenue protégée de toute torsion dans le profilé en U (4) opposé à la barre conductrice (5), et prenant appui sur la face de base (16), et en ce que des moyens d'isolation et d'amortissement sont prévus entre l'écrou carré (44) et la face de base (16).

4. Dispositif selon l'une des revendications 1 à 3, **caractérisé en ce que** l'élément amortisseur (31) prévu entre la barre conductrice (5) et l'élément isolant (19) est exécuté comme bande élastique muni de nervures (33) ou de noppes façonnées au moins sur une face.

5. Dispositif selon revendications 4, **caractérisé en ce que** l'élément amortisseur (31) est conçu avec des barrettes de maintien (32) formées sur sa face arrière.

6. Dispositif selon l'une des revendications 1 à 5, **caractérisé en ce que** l'élément de support (2) est constitué de métal, préférentiellement en aluminium.

7. Dispositif selon l'une des revendications 1 à 6, **caractérisé en ce que** l'élément isolant (19) consiste en une pièce isolante (25) moulée en forme de U, s'achevant, la bordure en étant prolongée sur l'ensemble du contour, en voûte d'isolation (20) formée à angle droit, ladite voûte d'isolation étant disposée à plat contre les faces latérales (8,9) du segment antérieur (3) en forme de U profilé, et en ce que la pièce isolante (25) est pourvue d'un percement d'accès (29), autour duquel s'élève un tourillon (30) tubulaire.

8. Dispositif selon revendication 7, **caractérisé en ce que** la pièce isolante (25) de l'élément isolant (19) est disposée en largeur au-dessus de la voûte d'isolation (20) se raccordant à angle droit, de sorte que la partie supérieure forme un appendice de retenue (26) pour l'élément amortisseur (31).

9. Dispositif selon l'une des revendications 7 ou 8, **caractérisé en ce que** l'élément isolant (19) est muni de petites nervures (34) sur les faces internes de la voûte d'isolation (20), lesdites nervures maintenant l'élément isolant (19) lors du montage sur l'élément de support (2).

10. Dispositif selon l'une des revendications 1 à 9, **caractérisé en ce qu'** une partie de la vis de fixation (42) avec un écrou carré (44) est gainée, à son extrémité opposée à la barre conductrice collectrice (5), d'une cosse d'isolation (35) en matière isolante, préférentiellement en résine thermodurcissable, fixée entre les faces latérales (17,18) de l'élément de support (2).

11. Dispositif selon revendication 10, **caractérisé en ce que** la cosse d'isolation (35) consiste en un boîtier (37) de forme rectangulaire monté entre les faces (17,18) du segment postérieur (4) en les affleurant presque, dans lequel est logé l'écrou carré (44), et en un téton (36) tubulaire formé sur le fond de boîtier (49) autour d'un percement d'accès (50) destiné à isoler l'élément de fixation (42).

12. Dispositif selon l'une des revendications 10 ou 11, **caractérisé en ce qu'** un appui élastique à l'extrémité de l'élément de fixation (42) est réalisé par une gamiture de cosse (40) en matériau élastique logée dans la cosse d'isolation (35) entre le fond de boîtier (49) et l'écrou carré (44), ladite garniture de cosse débordant sur le pourtour de l'écrou carré (44) et étant munie de bordures (10) enveloppant une partie au moins de la hauteur d'écrou.

13. Dispositif selon revendication 12, **caractérisé en ce que** la garniture de cosse (40) est munie de nervures (11) ou de noppes façonnées au moins sur une face.

14. Dispositif selon revendication 13, **caractérisé en ce que** les nervures (11 et 33) sont de forme trapézoïdale.

15. Dispositif selon l'une des revendications 11 à 14, **caractérisé en ce que** le boîtier (37) de la cosse d'isolation (35) est pourvu sur les méplats de boîtier (51,52) de petites nervures (38,41) maintenant la cosse d'isolation (35) lors du montage sur l'élément de support (2).

16. Dispositif selon l'une des revendications 11 à 15, **caractérisé en ce que** le boîtier (37) de la cosse d'isolation (35) est muni d'un capuchon de protection (12), ledit capuchon présentant un couvercle de capuchon protecteur (13) recouvrant le boîtier (37) à deux rebords de capuchon protecteur (14,15) se conformant en les affleurant aux faces latérales (17,18) du segment postérieur (4), lesquelles couvrent le boîtier (37) jusqu'à environ la moitié de la hauteur des méplats de boîtier (51,52), et présentant deux rebords de capuchon protecteur (45,46) perpendiculaires aux faces latérales (17,18) et se prolongeant jusqu'au fond de boîtier (49), et en ce que les rebords de capuchon protecteur prolongés (45,46) sont munis de nervures de maintien (47,48) à leur extrémité, lesdites nervures se positionnant sur des saillies de retenue (53,54) appliquées sur le boîtier (37).

17. Dispositif selon l'une des revendications 1 à 16, **caractérisé en ce que** l'élément isolant (19) est en résine thermodurcissable ou en matière thermoplastique.

18. Dispositif selon l'une des revendications 1 à 17, **caractérisé en ce que** l'élément de support (2) présente des évidements (27) dans le segment antérieur (3) sur les faces latérales (6,7) entre deux éléments isolants (19), en ce que l'écartement des bords latéraux des évidements (27) représente au moins la largeur du segment postérieur (4), et en ce que l'élément de support (2) comprend des évidements (28) dans les segments d'extrémité, lesdits évidements représentant environ la demi-largeur des évidements (27) entre deux éléments isolants (29).

19. Dispositif selon revendication 18, **caractérisé en ce que** les faces latérales (17,18) du segments postérieur (4) sont écourtées à leurs extrémités et forment un segment de fixation (55), en ce que le côté de base du segment de fixation (55) peut être posé à plat sur un cadre de montage, et en ce que sur la face de base (16) du segment de fixation (55) existent un ou plusieurs percements d'accès (56) pour un ou plusieurs éléments de fixation (57).
